(19) Europäisches Patentamt
European Patent Office
Office européen des brevets

(11) EP 0 548 274 B1

(12) **EUROPEAN PATENT SPECIFICATION**

(45) Date of publication and mention of the grant of the patent:
**28.02.1996 Bulletin 1996/09**

(21) Application number: **91918527.2**

(22) Date of filing: **16.09.1991**

(51) Int Cl.[6]: **C08F 110/06**, C08F 4/603, C08F 4/643, C08F 4/76

(86) International application number:
**PCT/US91/06692**

(87) International publication number:
**WO 92/05208 (02.04.1992 Gazette 1992/08)**

(54) **IONIC CATALYST FOR THE PRODUCTION OF POLY-ALPHA-OLEFINS OF CONTROLLED TACTICITY**

IONISCHER KATALYSATOR ZUR HERSTELLUNG VON POLYALPHAOLEFINEN MIT KONTROLLIERTER TAKTICITÄT

CATALYSEUR IONIQUE POUR LA PRODUCTION DE POLY-ALPHA-OLEFINES A TACTICITE CONTROLEE

(84) Designated Contracting States:
**AT BE CH DE DK ES FR GB IT LI NL SE**

(30) Priority: **14.09.1990 US 582702**

(43) Date of publication of application:
**30.06.1993 Bulletin 1993/26**

(73) Proprietor: **EXXON CHEMICAL PATENTS INC.**
**Linden, New Jersey 07036-0710 (US)**

(72) Inventors:
- **TURNER, Howard, William**
  **Houston, TX 77059 (US)**
- **HLATKY, Gregory, George**
  **Houston, TX 77062 (US)**

(74) Representative:
**Veldhuizen, Albert Dirk Willem et al**
**Abingdon, Oxfordshire OX13 6BB (GB)**

(56) References cited:
**EP-A- 0 277 004**
**EP-A- 0 423 100**
**EP-A- 0 426 637**
**EP-A- 0 426 638**
**CA-A- 2 027 144**

Note: Within nine months from the publication of the mention of the grant of the European patent, any person may give notice to the European Patent Office of opposition to the European patent granted. Notice of opposition shall be filed in a written reasoned statement. It shall not be deemed to have been filed until the opposition fee has been paid. (Art. 99(1) European Patent Convention).



Printed by Jouve, 75001 PARIS (FR)

**Description**

FIELD OF THE INVENTION

This invention relates to an ionic catalytic process for the production of syndiotactic poly-α-olefin resin which permits improved control over tacticity, molecular weight and molecular weight distribution. Such syndiotactic poly-α-olefins are produced by polymerization of alpha-olefin monomers in the presence of a catalyst system comprising an ionic reaction product of a bis(cyclopentadienyl) Group IVB metal compound (hereafter a "metallocene") of specific structure and an activator compound comprising a cation which is capable of donating a proton or is otherwise reactable with a non-cyclopentadienyl ligand of the metallocene and an anion which is compatible with and non-coordinating to the metallocene cation generated upon reaction of the metallocene with said activator compound. By appropriate selection of the metallocene and activator components as hereinafter described, the aforementioned catalyst system can be tailored to the production of the desired weight average molecular weight ($M_w$) sydiotactic poly-α-olefins.

BACKGROUND OF THE INVENTION

Polymers comprised of alpha-olefin monomers have hydocarbyl groups pendant from the polymer backbone chain. Relative to the polymer backbone chain, the pendant hydrocarbyl groups may be arranged in different stereochemical configurations which are denominated as atactic, isotactic, or syndiotactic pendant group configuration.

The degree and type of tacticity of a polyolefin molecule is a critical determinant of the physical properties which a resin composed of such polymer molecules will exhibit. Other critical determinants of the properties which a resin will exhibit are the type and relative concentration of monomers and comonomers, the weight average molecular weight ($M_w$) of the polymer molecules comprising the resin bulk, the molecular weight distribution (MWD) and the composition distribution of the resin.

Important from a commercial standpoint is the rate or productivity at which a catalyst system will produce a polyalpha-olefin resin of a desired set of properties in terms of tacticity, weight average molecular weight and molecular weight distribution.

The weight average molecular weight ($M_w$) of a polyalpha-olefin is an important physical property determinant of the practical uses to which such polymer can be put. For end use applications which require high strength and low creep, the $M_w$ of such a resin must generally be in excess of 100,000. Further, for such high strength applications, the polyalpha-olefin resin must generally have a high degree of crystallinity. The degree of crystallinity which a polyalpha-olefin is capable of obtaining is, in major part, determined by the stereochemical regularity of the hydrocarbyl groups which are pendent to the polymer molecule backbone, i.e., the tacticity of the polymer.

Five types of tacticity have been described in poly-α-olefins: atactic, normal isotactic, isotactic stereoblock, syndiotactic, and hemiisotactic. Although all of these tacticity configurations have been primarily demonstrated in the case of polypropylene, in theory each is equally possible for polymers comprised of any α-olefin, cyclic olefin or internal olefin.

Atactic poly-α-olefins are those wherein the hydrocarbyl groups pendent to the polymer molecule backbone assume no regular order in space with reference to the backbone. This random, or atactic, structure is represented by a polymer backbone of alternating methylene and methine carbons, with randomly oriented branches substituting the methine carbons. The methine carbons randomly have R and S configurations, creating adjacent pairs either of like configuration (a "meso" or "m" dyad) or of unlike configuration (a "racemic" or "r" dyad). The atactic form of a polymer contains approximately equal fractions of meso and racemic dyads.

Atactic poly-α-olefins, particularly atactic polypropylene, are soluble in aliphatic and aromatic solvents at ambient temperature. Since atactic polymers exhibit no regular order or repeating unit configurations in the polymer chain, such atactic polymers are amorphous materials. Atactic polymers exhibit little if any crystallinity, hence they are generally unsuitable for high strength applications regardless of the weight average molecular weight of the resin.

Isotactic poly-α-olefins are those wherein the pendent hydrocarbyl groups are ordered in space to the same side or plane of the polymer backbone chain. Using isotactic polypropylene as an example, the isotactic structure is typically described as having the pendent methyl groups attached to the ternary carbon atoms of successive monomeric units on the same side of a hypothetical plane through the carbon backbone chain of the polymer, e.g., the methyl groups are all above or below the plane as shown below.

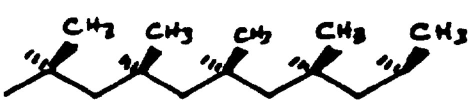

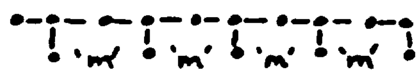

The degree of isotactic regularity may be measured by NMR techniques. Bovey's NMR nomenclature for an isotactic pentad is ... mmmm ... with each "m" representing a "meso" dyad or successive methyl groups on the same side in the plane.

In the normal isotactic structure of an poly-α-olefin, all of the monomer units have the same stereochemical configuration, with the exception of random errors which appear along the polymer. Such random errors almost always appear as isolated inversions of configuration which are corrected in the very next α-olefin monomer insertion to restore the original R or S configuration of the propagating polymer chain. Single insertions of inverted configuration give rise to rr triads, which distinguish this isotactic structure in its NMR from the isotactic stereoblock form.

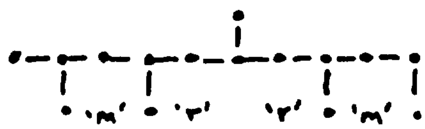

As is known in the art, any deviation or inversion in the regularity of the structure of the chains lowers the degree of isotacticity and hence the crystallinity of which the polymer is capable. There are two other types of "errors" which have been observed in isotactic polymers prepared using metallocene-alumoxane catalyst systems which act to lower the melting point and/or $T_g$ of the material. These errors, as shown below arise when a monomer is added to the growing polymer chain in a 1, 3 or 2,1 fashion.

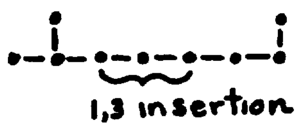


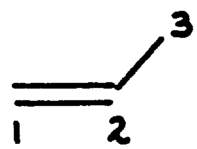

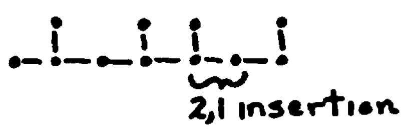


Long before anyone had discovered a catalyst system which produced the isotactic stereoblock form of a poly-α-olefin, the possible existence of a polymer of such micro-structure had been recognized and mechanisms for its formation had been proposed based on conventional Ziegler-Natta mechanisms in Langer, A.W., Lect. Bienn. Polym. Symp. 7th (1974); Ann. N.Y. Acad. Sci. 295, 110-126 (1977). The first example of this form of polypropylene and a catalyst which produces it in a pure form were reported in U.S. Patent No. 4,522,982. The formation of stereoblock isotactic polymer differs from the formation of the normal isotactic structure in the way that the propagation site reacts to a stereochemical error in the chain. As mentioned above, the normal isotactic chain will return to the original configuration following an error because the stereochemical regulator, the catalytic active metal species and its surrounding ligands, continue to dictate the same stereochemical preference during monomer insertion. In stereoblock propagation, the catalytic active metal site itself changes from one which dictates a monomer insertion of R configuration to one which dictates an S configuration for monomer insertion. The isotactic stereoblock form is shown below.

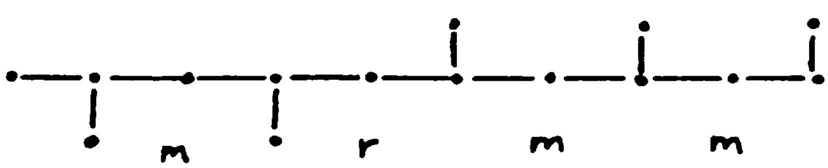

This occurs either because the metal and its ligands change to the opposite stereochemical configuration or because the configuration of the last added monomer, rather than the metal chirality, controls the configuration of the next added monomer. In Ziegler-Natta catalysts, including the above referenced system, the exact structure and dynamic properties

of the active site are not well understood, and it is virtually impossible to distinguish between the "site chirality exchange" and "chain end control" mechanisms for the formation of isotactic stereoblock poly-1-olefins.

Unlike normal isotactic polymers, the lengths of individual blocks of the same configuration in the stereoblock structure vary widely due to changing reaction conditions. Since only the erroneous parts of the chains affect the crystallinity of the resin product, in general, normal isotactic polymers and isotactic stereoblock polymers of long block length (greater than 50 isotactic placements) have similar properties.

Highly isotactic poly-α-olefins are insoluble in xylene and are capable of exhibiting a high degree of crystallinity. Accordingly, isotactic poly-α-olefins are, depending upon their weight average molecular weight exceeding about 100,000, well suited to high strength end use applications.

Syndiotactic poly-α-olefins are those wherein the hydrocarbyl groups pendent to the polymer molecular backbone alternate sequentially in order from one side or plane to the opposite side or plane relative to the polymer backbone, as shown below.

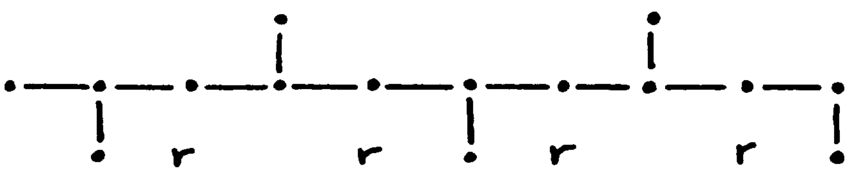


In NMR nomenclature, this pentad is described as ... rrrr ... in which each r represents a "racemic" dyad, i.e., successive methyl groups on alternate sides of the plane. The percentage of r dyads in the chain determines the degree of syndiotacticity of the polymer.

Syndiotactic propagation has been studied for over 25 years; however, only a few good syndiospecific catalysts have been discovered, all of which are extremely sensitive to monomer bulkiness. As a result, well-characterized syndiotactic polymers are limited only to polypropylenes. The molecular chain backbone of syndiotactic polymer can be considered to be a copolymer of olefins with alternating stereochemical configurations. Highly syndiotactic polymers are generally highly crystalline and will frequently have high melting points similar to their isotactic polymorphs.

Like isotactic poly-α-olefins, syndiotactic poly-α-olefins are capable of exhibiting a high degree of crystallinity, hence are suitable for high strength applications provided their $M_w$ exceeds about 100,000.

For any of the above described materials the final resin properties and its suitability for particular applications depend on the type of tacticity, the melting point (stereoregularity), the average molecular weight, the molecular weight distribution, the type and level of monomer and comonomer, the sequence distribution, and the presence or absence of head or end group functionality. Accordingly, the catalyst system by which such a stereoregular polyalpha-olefin resin is to be produced should, desirably, be versatile in terms of $M_w$, MWD, tacticity type and level, and comonomer choice. Further, the catalyst system should be capable of producing these polymers with or without head and/or end group functionality, such as olefinic unsaturation. Still further, such catalyst system must be capable, as a commercially practical constraint, of producing such resins at an acceptable production rate. Most preferably, the catalyst system should be one which, at its productivity rate, provides a resin product which does not require a subsequent treatment to remove catalyst residue to a level which is acceptable for the resin in the end use application desired. Finally, an important feature of a commercial catalyst system is its adaptability to a variety of processes and conditions.

Conventional titanium based Ziegler-Natta catalysts for the preparation of isotactic polymers are well known in the art. These commercial catalysts are well suited for the production of highly crystalline, high molecular weight materials. The systems are, however, limited in terms of molecular weight, molecular weight distribution, and tacticity control. The fact that the conventional catalysts contain several types of active sites further limits their ability to control the composition distribution in copolymerization.

More recently a new method of producing isotactic polymers from an alumoxane cocatalyzed, or activated, metallocene which in its natural state has chirality centered at the transition metal of the metallocene, was reported in Ewen, J.A., J. Amer. Chem. Soc., v. 106, p. 6355 (1984) and Kaminsky, W., et al., Angew. Chem. Int. Ed. Eng.; 24, 507-8 (1985).

Catalysts that produce isotactic polyolefins are also disclosed in Patent No. 4,794,096. This patent discloses a chiral, stereorigid metallocene catalyst which is activated by an alumoxane cocatalyst which is reported to polymerize olefins to isotactic polyolefin forms. Alumoxane cocatalyzed metallocene structures which have been reported to polymerize stereoregularly are the ethylene bridged bis-indenyl and bis-tetrahydroindenyl titanium and zirconium (IV) catalyst. Such catalyst systems were synthesized and studied in Wild et al., J. Organomet. Chem. 232, 233-47 (1982), and were later reported in Ewen and Kaminsky et al., mentioned above, to polymerize α-olefins stereoregularly. Further reported in West German Off DE 3443087Al (1986), but without giving experimental verification, is that the bridge length of such stereorigid metallocenes can vary from a $C_1$ to $C_4$ hydrocarbon and the metallocene rings can be simple or bi-cyclic but must be asymmetric

Metallocene-alumoxane catalyst generally require a high content of alumoxane cocatalyst to be sufficiently productive for commercial use. Accordingly, metallocene-alumoxane produced isotactic poly-α-olefin resins generally have a higher than desired catalyst residue content. Hafnium systems, which yield polymers of higher average $M_w$ than the zirconium analogs, have very low activities even at high alumoxane concentrations.

Syndiotactic polyolefins were first disclosed by Natta et al. in U.S. Patent No. 3,258,455. As reported Natta obtained syndiotactic polypropylene by using a catalyst prepared from titanium trichloride and diethyl aluminum monochloride. A later patent to Natta et al., U.S. Patent No. 3,305,538, discloses the use of vanadium triacetylacetonate or halogenated vanadium compounds in combinations with organic aluminum compounds for production of syndiotactic polypropylene.

More recently, a metallocene based catalyst system has been disclosed which is stated to be capable of production of syndiotactic polypropylene of high stereoregularity. U.S. Patent No. 4,892,851 describes catalyst systems consisting of a bridged metallocene having at least two differently substituted cyclopentadienyl ring ligands which, when cocatalyzed with an alumoxane, is stated to be capable of production of syndiotactic polypropylene. Again, in commercial production to obtain a sufficient productivity level with such catalyst system, the content of alumoxane is undesirably high and consequently the catalyst residue in the resin so produced is undesirably high.

In all methylalumoxane/metallocene catalyst systems the polymer characteristics ($M_w$, MWD, tacticity type, comonomer incorporation, etc.) are controlled either by modifications to the structure of the metallocene precursor or by adjustment of the process conditions (temperature, pressure, concentrations). In general, adjustment of process conditions does not allow independent control of tacticity level, $M_w$ and comonomer content. Addition of chain transfer agents such as hydrogen gas to the reactor gives lower molecular weight products without affecting tacticity, however, the resulting polymer no longer has unsaturated end groups. End group functionalization is often an important feature in the application of low molecular weight polymers. Given these limitations, one must prepare a wide variety of differently substituted metallocene precursors to access the entire range of desired materials.

In view of the difficulty and practical limitations in the synthesis of bridged metallocene complexes necessary for the production of an alumoxane activated metallocene catalyst system capable of producing crystalline poly-1-olefins, it would be desirable to develop new methods of activation which expand the product capability of a particular metallocene catalyst.

SUMMARY OF THE INVENTION

The invention provides a method for producing a syndiotactic crystalline poly-α-olefin, comprising the step of;

(a) contacting an α-olefin monomer at a temperature and pressure sufficient to induce polymerization thereof with a catalyst comprising the reaction product of

(i) a bis(cyclopentadienyl) Group IVB metal component of the formula

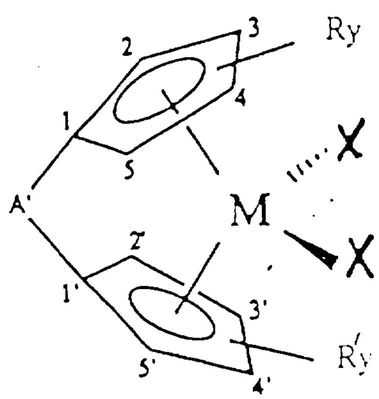

wherein M is titanium, zirconium or hafnium;
A' is a divalent hydrocarbon or silahydrocarbon radical which structurally bridges together the cyclopentadienyl ring ligands;
each X is independently selected from the group consisting of hydride radicals, hydrocarbyl radicals having from 1 to 20 carbon atoms, substituted hydrocarbyl radicals wherein one or more of the hydrogen atoms are replaced with a halogen atom, organometalloid radicals comprising a Group IV-A element wherein each of the hydrocarbyl substitutions contained in the organic portion of said organometalloid independent!y contain 1 to 20 carbon atoms, or both X substituents are joined and bound to the metal atom to form a metallacycle ring containing from 3 to 20

carbon atoms; each cyclopentadienyl group has from zero to 4 substituents (R or R') where Ry and R'y are independently hydrocarbyl radicals containing from 1 to 50 carbon atoms; substituted hydrocarbyl radicals wherein one or more of the hydrogen atoms is replaced by a halogen radical, an amido radical, a phosphido radical, an alkoxy radical, or radical containing a Lewis acidic or basic functionality; hydrocarbyl substituted metalloid radicals wherein the metalloid is selected from the Group IV-A of the Periodic Table of elements; halogen radicals, amido radicals, phosphido radicals, alkoxy radicals, alkylborido radicals, or a radical containing a Lewis acidic or basic functionality; or two adjacent R groups are joined forming a $C_4$ to $C_{20}$ ring to give a saturated or unsaturated polycyclic cyclopentadienyl and "y" denotes the carbon atom of the cyclopentadienyl ring to which a R group is bonded;
Ry and R'y being chosen such that they are of substantially different steric bulk and are bonded to cyclopentadienyl ring carbons so as to render each cyclopentadienyl ring to be symmetrical with respect to the A' bridging group but different with respect to each other; and

(ii) an activator component comprising a cation capable of irreversibly reacting with a substituent of the bis (cyclopentadienyl) Group IVB metal cation; and an anion which is compatible with and non-coordinating to and capable of stabilizing the Group IVB metal cation and sufficiently labile to be displaced therefrom by an olefinic or acetylenically unsaturated substrate;
(b) and recovering a crystalline poly-α-olefin product which is predominantly of syndiotactic stereochemical configuration. Variable molecular weight, narrow molecular weight distribution and end group functionalization are also attainable by using this process. The process preferably comprises contacting α-olefin monomers and comonomers in a suitable solvent at a temperature of from 0°C to 300°C with an ionic catalyst to produce a polymer.

The ionic catalyst, employed in the polymerization process, may comprise the reaction product of a first component which is bis(cyclopentadienyl) derivative of a metal of Group IV-B of the Periodic Table of the Elements, which metal is capable of forming a cation formally having a coordination number of 3 and a valence of +4; and at least one second component comprising a cation capable of reaction with a non-cyclopentadienyl ligand of the metallocene to generate a metallocene cation complex and a compatible non-coordinating anion, which anion is bulky and labile, and capable of stabilizing the Group IV-B metal cation without interfering with the ability of said Group IV-B metal cation, or its decomposition product, to polymerize α-olefins to form polymers. When the bis(cyclopentadienyl) Group IV-B metal component (hereafter referred to as a "metallocene") selected for the ionic catalyst is a chiral racemic compound which is substantially free of achiral meso isomers isotactic poly-α-olefin is predominantly produced.

In accordance with this invention, when the metallocene selected for the ionic catalyst is a bridged stereorigid compound composed of two different cyclopentadienyl ligands each of which is free of asymmetric carbon atoms, the process of this invention produces a predominantly syndiotactic poly-α-olefin.

In general the ionic catalyst system of this invention derived from a particular metallocene complex will produce a polymer having the same type of tacticity which would be produced using methylalumoxane as the activating reagent. The ionic catalyst system allows new levels of control of the polymer properties ($M_w$, MWD, tacticity level, end groups, comonomer content, low ash, etc.) for a single metallocene precursor by use of an activator having specific cation and anion as well as by the addition of third components such as Lewis bases and chiral Lewis bases.

## DESCRIPTION OF THE PREFERRED EMBODIMENTS

The invention provides a method for producing a poly-α-olefin of syndiotactic stereochemical configuration.

By the process of this invention, the poly-α-olefin may be produced to a weight average molecular weight ($M_w$) which suits it well to high strength applications, and the so produced resin has a minimal catalyst residue which does not require deashing of the resin to render it suitable for desired end use applications.

### Ionic Catalyst System - General Description

The process of this invention is practised with that class of ionic catalysts referred to, disclosed, and described in EP-A-0277003 and EP-A-0277004.

The improved catalysts may be prepared by combining at least two components. The first component is a bis(cyclopentadienyl) derivative of a Group IV-B metal compound containing at least one ligand which will combine with the second component or at least a portion thereof such as a cation portion thereof. The second component may be an ion-exchange compound comprising a cation which will irreversibly react with at least one ligand contained in said Group IV-B metal compound (first component) and a non-coordinating anion which is either a single coordination complex comprising a plurality of lipophilic radicals covalently coordinated to and shielding a central formally charge-bearing metal or metalloid atom or an anion comprising a plurality of boron atoms such as polyhedral boranes, carboranes and

metallacarboranes.

The cation portion of the second component may comprise Bronsted acids such as protons or protonated Lewis bases or may comprise reducible Lewis acids such as ferricinum, tropylium, triphenylcarbenium or silver cations.

In general, suitable anions for the second component may be any stable and bulky anionic complex may be selected by reference to the following molecular attributes: 1) the anion has a molecular diameter greater than 4Å; 2) the anion forms stable ammonium salts; 3) the negative charge on the anion is delocalized over the framework of the anion or localized within the core of the anion; 4) the anion is a relatively poor nucleophile; and 5) the anion is not a powerful reducing to oxidizing agent. Anions meeting these criteria - such as polynuclear boranes, carboranes, metallacarboranes, polyoxoanions and anionic coordination complexes are well described in the chemical literature. Upon combination of the first and second components, the cation of the second component reacts with one of the ligands of the first component, thereby generating an anion pair consisting of a Group IV-B metal cation and the aforementioned anion, which anion is compatible with and noncoordinating towards the Group IV-B metal cation formed from the first component. The anion of the second compound must be capable of stabilizing the Group IV-B metal cation without interfering with the Group IV-B metal cation's ability to function as a catalyst and must be sufficiently labile to permit displacement by an olefin, diolefin or an acetylenically unsaturated monomer during polymerization.

A. <u>The Metallocene Component</u>

In general Group IV-B metal catalyst compounds; i.e., titanium, zirconium and hafnium metallocene compounds, are bis(cyclopentadienyl) derivatives of titanium, zirconium and hafnium. In general, represented by the following formulae:

1. $(A\text{-}Cp)MX_1X_2$

2. $(A\text{-}Cp)\overline{MX'_1X'_2}$

3. $(A\text{-}Cp)ML$

4. $(Cp^*)(Cp\overline{R)\ M}X_1$ ·

wherein "Cp" represents a cyclopentadienyl radical which may be substituted or unsubstituted, and:

(A-Cp) is either (Cp) ($Cp^*$) or Cp-A'-$Cp^*$ and Cp and $Cp^*$ are the same or different cyclopentadienyl ring substituted with from zero to five substituent groups R.

The substituent groups R may be, independently, selected from a wide variety of classes of radical groups which form covalent bonds to the carbon atoms of the Cp-rings. These substituents act to modify the catalyst behavior by affecting the symmetry, sterics, and electronics of the transition metal center. Illustrative but not limiting examples of suitable R substituents include hydrocarbyl radicals containing from 1 to 50 carbon atoms; substituted hydrocarbyl radicals wherein one or more of the hydrogen atoms is replaced by a halogen radical, a amido radical ($X_1X_2N$-) a phosphido radical ($X_1X_2P$-), an alkoxy radical ($X_1O$-) or any other radical containing Lewis acidic or basic functionality; hydrocarbyl substituted metalloid radicals wherein the metalloid is selected from the Group IV-A of the Periodic Table of elements; halogen radicals, amido radicals ($X_1X_2N$-), phosphido radicals ($X_1X_2P$-), alkoxy radicals ($X_1O$-), alkylborido radicals ($X_1X_2B$-), or any other radical containing Lewis acidic or basic functionality; or Cp and/or $Cp^*$ are a cyclopentadienyl ring in which two adjacent R groups are joined forming a $C_4$ to $C_{20}$ ring to give a saturated or unsaturated polycyclic cyclopentadienyl ligand such as indenyl, tetrahydroindenyl, fluorenyl, or octahydrofluorenyl; A' is a covalent bridging group between the two cyclopentadienyl groups; M is titanium, zirconium or hafnium; L is an olefin, diolefin or aryne ligand; $X_1$ and $x_2$ are, independently, selected from the group consisting of hydride radicals, hydrocarbyl radicals having from 1 to 20 carbon atoms, hydrocarbyl radicals wherein one or more of the hydrogen atoms are replaced with a halogen atom, organometalloid radicals comprising a Group IV-A element wherein each of the hydrocarbyl substitutions contained in the organic portion of said organometalloid independently contain from 1 to 20 carbon atoms ; $X'_1$ and $X'_2$ are joined and bound to the metal atom to form a metallacycle, in which the metal atom, $X'_1$ and $X'_2$ form a hydrocarbocyclic ring containing from 3 to 20 carbon atoms; and R is a substituent, preferably a hydrocarbyl substituent, on one of the cyclopentadienyl radicals which is also bound to the metal atom.

The Group IV-B metal compounds useful as the first component in ionic catalyst systems for the production of crystalline syndiotactic polymer-α-olefins are bis-cyclopentadienyl derivatives of titanium, zirconium or hafnium which compounds are non-chiral bridged stereorigid compounds composed of two differently substituted cyclopentadienyl ligands, as distinguished from chiral racemic compounds which yield isotactic poly-α-olefins. Such metallocene compounds are represented by the general formula set forth in equation 1-4, wherein; M, $X_1$, $X_2$ and L are defined as in Equations 1-4 and ACp is Cp-A'-$Cp^*$ where Cp and $Cp^*$ are each a cyclopentadienyl ligand which are independently unsubstituted or substituted at one or more carbon atoms of the ligands by one or more monovalent or divalent radicals R, and A' is a divalent hydrocarbon or silahydrocarbon radical which structurally bridges together the cyclopentadienyl

ring ligands to impart stereorigidity to the Group IV-B metal compound such that the Group IV-B compound is non-chiral and the two cyclopentadienyl ligands have distinctly different chemical structures (for producing syndiotactic polymer); in contrast to the Group IV-B metal compound being a chiral compound either in its pure L or pure D optical isomer form or a racemic mixture thereof (for producing isotactic polymer).

As a comparative, stereorigid chiral metallocene components for producing isotactic polymers are described in EP-A-0 277 004, which shows that in general, catalysts prepared using chiral metallocene precursors produce poly-1-olefins having enhanced isotactic character.

Suitable chiral Group IV-B metal compounds have cyclopentadiene ligand systems as defined in formula 5I:

5I.

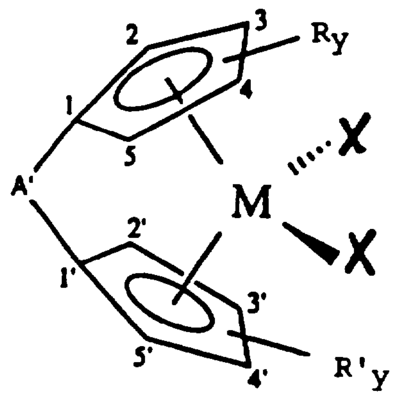

wherein M, X (whether $X_1$, $X_2$, $X'_1$ or $X'_2$) and A' are defined as in equations 1-4. Substituents Ry and R'y are defined as R in equations 1-4 where the subscript "y" denotes the carbon atom on the Cp-ring to which the substituent is bonded and $R_y$ and $R'_Y$ are chosen in such a way as to preclude any plane of symmetry containing the metal center in Formula 5.

Chiral metallocene precursors may be those of Formula 5I where $R_y$ and $R'_y$ are chosen such that the metallocene framework 1) has no plane of symmetry containing the metal center, and 2) has a $C_2$-axis of symmetry through the metal center. Such complexes, such as rac-$Me_2Si(Indene)_2ZrMe_2$, are well known in the art and generally produce isotactic polymers with higher degrees of stereoregularity than less symmetric chiral systems.

Chiral racemic metallocene compounds which provide ionic catalyst system which are specific to the production of isotactic poly-α-olefins include: racemic [1,1-dimethylsilanylene-bis(3-ethylcyclopentadienyl)] zirconium dimethyl; [1,1'-dimethylsilanylene-bis (indenyl)] zirconium dihydride; [1,1'-dimethylsilanylene-bis(4,5,6,7-tetrahydroindenyl)] zirconium (methyl)hydride; 1,1'-(1,1,2,2-tetramethyldisilanylene)-bis(3-methylcyclopentadienyl)] zirconium dimethyl ; [ 1, 1' - (1, 1 , 2 , 2-tetramethyldisilanylene)-bis(4,5,6,7-tetrahydroindenyl)] zirconium diphenyl; [1,1'-dimethylsilanylene-bis (3-trimethylsilanylcyclopentadienyl)]zirconium dihydride; [1,1'-(1,1,2,2-tetramethyldisilanylene)-bis(3-trimethylsilanylcyclopentadienyl)] zirconium dimethyl; [1,1'-(1,1,3,3-tetramethyldisiloxanylene)-bis(4,5,6,7-tetrahydroindenyl)] zirconium (phenyl)hydride; [1,1'-(1,1,4,4-tetramethyl-1,4-disilanylbutylene)-bis(4,5,6,7-tetrahydroindenyl)] zirconium dimethyl; [1,1'-(2,2-dimethyl-2-silapropylene)-bis(3-methylcyclopentadienyl)] zirconium dimethyl; racemic [1,1-dimethylsilanylene-bis (3-methylcyclopentadienyl)] hafnium diethyl; [1,1'-dimethylsilanylene-bis(indenyl) hafnium dimethyl; [1,1'-dimethylsilanylene-bis(4,5,6,7-tetrahydroindenyl) ] hafnium diphenyl; [1,1'-(1,1,2,2-tetramethyldisilanylene)-bis (3-methylcyclopentadienyl)] hafnium dihydride; [1,1'-(1,1,2,2-tertamethyldisilanylene)-bis(4,5,6,7-tetrahydroindenyl)] hafnium dibutyl; [1,1'-dimethylsilanylene-bin(trinethylnilanyl cyclopentadienyl)] hafnium dimethyl; [1,1-(1,1,2,2-tetranethyldisilanylene) -bis(3-trimethylsilanylcyclopentadienyl)] hafnium dimethyl; [1,1'-(1,1,3,3-tetramethyldiailoxanylene)-bis(4,5,6,7-tetrahydroindenyl)] titanium dihydride; [1,1'-(1,1,4,4-tetramethyl-1,4-disilanylbutylene)-bis (4,5,6,7-tetrahydroindenyl)] hafnium dimethyl; and -titanium dihydride.

In contrast to such metallocenes for producing isotactic polyolefins, it has now been found that in combination with the co-anionic activators described herein, certain stereorigid metallocenes with differing cyclopentadienyl ligands yield syndiotactic polyolefins.

The metallocene components employed to provide an ionic catalyst which is specific to the production of syndiotactic polyolefins in accordance with the process of the present invention may be described by the general formula set forth in equations 1-4 wherein; M, $X_1$, $X_2$ and L are defined as in equations 1-4 and ACp is Cp-A'-Cp* and Cp and Cp* are independently substituted such that the two bridged cyclopentadienyl ligands have distinctly different chemical structures, and A' is a divalent bridging group which links the two cp-ligands together to impart stereorigidity to the Group IV-B metal compound. Suitable Group IV-B metal compounds have cyclopentadienyl ligand systems as defined in formula 5S.

5S. 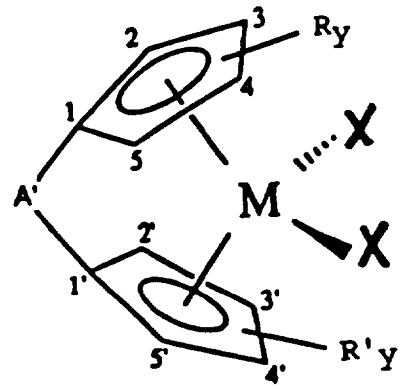

wherein M, X (whether $X_1$, $X_2$, $X'_1$ or $X'_2$) and A' are defined as in equations 1-4. Substituents $R_y$ and $R'_y$ are defined as R in equations 1-4 where the subscript "y" denotes the carbon atom on the Cp-ring to which the substituent is bonded and $R_y$ and $R'_y$ are chosen such that the two Cp-ligands have substantially different steric bulk. In order to produce a syndiotactic polymer the pattern of the groups substituted on the Cp-rings is important. Thus, by "steric difference" or "sterically different" as used herein, it is intended to imply a difference between the steric characteristics of the Cp and Cp* rings that renders each to be symmetrical with respect to the A' bridging group but different with respect to each other that controls the approach of each successive monomer unit that is added to the polymer chain. The steric difference between the Cp and Cp* rings acts to block the approaching monomer from a random approach such that the monomer is added to the polymer chain in the syndiotactic configuration.

Preferable metallocene precursors for the production of syndiotactic polymers are those of Formula 5S where $R_y$ and $R'_y$ are chosen such that 1) the steric difference between the two Cp-ligands is maximized and 2) there remains a plane of symmetry through the metal center and the C-1 and C-1' carbon atoms of the Cp-rings in Formula 5S. Thus, complexes containing a first cyclopentadienyl which carries no substituent R, and a second cyclopentadienyl which is extremely bulky e.g. a fluorenyl group, such as $(CH_3)_2$ C(Cp) (Fluorenyl)M$(CH_3)_2$ (where M = Ti, zr, or Hf) which posses this symmetry are preferred, and generally produce the syndiotactic polymers with higher degrees of stereoregularity than less symmetric chiral systems. The nature of the bridging group may then be selected to determine e.g. molecular weight.

The non-chiral bridged metallocene precursors for the formation of the ionic catalysts of this invention may be prepared by any method known in the art. The synthesis process generally comprises the steps of 1) preparing the ligand, 2) deprotonating the two acidic protons of the ligand (using BuLi, KH or other strong bases), 3) reacting the deprotonated ligand with the halide of the transition metal, 4) purifying the metallocene halide complex (usually ACpM$Cl_2$), and 5) reacting the metallocene dihalide with MeLi or a hydride source to give the final product ACpM$(X_1)_2$ where X is methyl or hydride.

B. The Activator Component

Compounds useful as an activator component in the preparation of the ionic catalyst systems used in the process of this invention comprise a cation, which may be a Bronsted acid capable of donating a proton, and a compatible non-coordinating anion which anion is relatively large (bulky), capable of stabilizing the active catalyst species (the Group IV-B cation) which is formed when the two compounds are combined and said anion will be sufficiently labile to be displaced by olefinic diolefinic and acetylenically unsaturated substrates or other neutral Lewis bases such as ethers, nitriles and the like. Two classes of compatible non-coordinating anions have been disclosed in EP-A-0277003 and EP-A-0277004: 1) anionic coordination complexes comprising a plurality of lipophilic radicals covalently coordinated to and shielding a central charge-bearing metal or metalloid core, and 2) anions comprising a plurality of boron atoms such as carboranes, metallacarboranes and boranes.

In general, the activator compounds containing single anionic coordination complexes which are useful in this invention may be represented by the following general formula in which, for purposes of this exemplification, the cation is a proton donor, although the invention is not restricted in this regard:

$$5. \qquad [(L'\text{-}H)^+]_d[(M')^{m+}Q_1Q_2...Q_n]^{d-}$$

wherein:

L' is a neutral Lewis base;

H is a hydrogen atom;

[L'-H] is a Bronsted acid;

M' is a metal or metalloid selected from the Groups subtended by Groups V-B to V-A, VIII-B, VIII, I-B, II-B, III-A, IV-A, and V-A;

$Q_1$ to $Q_n$ are selected, independently, from the Group consisting of hydride radicals, dialkylamido radicals, alkoxide and aryloxide radicals, hydrocarbyl and substituted-hydrocarbyl radicals and organometalloidradicals and any one, but not more than one, of $Q_1$ to $Q_n$ may be a halide radical, the remaining $Q_1$ to $Q_n$ being, independently, selected from the foregoing radicals;

m is an integer from 1 to 7;

n is an integer from 2 to 8; and n - m = d.

As indicated above, any metal or metalloid capable of forming an anionic complex which is stable in water may be used or contained in the anion of the second compound. Suitable metals, then, include, but are not limited to, aluminum, gold and platinum. Suitable metalloids include, but are not limited to, boron, phosphorus and silicon. Compounds containing anions which comprise coordination complexes containing a single metal or metalloid atom are, of course, well known and many, particularly such compounds containing a single boron atom in the anion portion, are available commercially. In light of this, salts containing anions comprising a coordination complex containing a single boron atom are preferred.

The preferred activator compounds comprising boron may be represented by the following general formula:

$$5A. \quad [L'H]^{+}[BAr_1Ar_2X_3X_4]^{-}$$

Wherein:

L' is a neutral Lewis base;

H is a hydrogen atom;

$[L'-H]^+$ is a Bronsted acid;

B is boron in a valence state of 3;

$A_1$ and $A_2$ are the same or different aromatic or substituted-aromatic hydrocarbon radicals containing from about 6 to 20 carbon atoms and may be linked to each other through a stable bridging group; and

$X_3$ and $X_4$ are radicals selected, independently, from the group consisting of hydride radicals, halide radicals, with the proviso that $X_3$ and $X_4$ will not be halide at the same time, hydrocarbyl radicals containing from 1 to 20 carbon atoms, substituted-hydrocarbyl radicals, wherein one or more of the hydrogen atoms is replaced by a halogen atom, containing from 1 to 20 carbon atoms, hydrocarbyl-substituted metal (organometalloid) radicals wherein each hydrocarbyl substitution contains from 1 to 20 carbon atoms and said metal is selected from Group IV-A of the Periodic Table of the elements.

In general, $Ar_1$ and $Ar_2$ may, independently, be any aromatic or substituted-aromatic hydrocarbon radical containing from 6 to 20 carbon atoms. Suitable aromatic radicals include, but are not limited to, phenyl, naphthyl and anthracenyl radicals. Suitable substituents on the substituted-aromatic hydrocarbon radicals, include, but are not necessarily limited to, hydrocarbyl radicals, organometalloid radicals, alkoxy radicals, alkylamido radicals, fluoro and fluorohydrocarbyl radicals such as those useful as $X_3$ and $X_4$. The substituent may be ortho, meta or para, relative to the carbon atoms bonded to the boron atom. When either or both $X_3$ and $X_4$ are a hydrocarbyl radical, each may be the same or a different aromatic or substituted-aromatic radical as are $Ar_1$ and $Ar_2$, or the same may be a straight or branched alkyl, alkenyl or alkynyl radical having from 1 to 20 carbon atoms, a cyclic hydrocarbon radical having from 5 to 8 carbon atoms or an alkyl-substituted cyclic hydrocarbon radical having from 6 to 20 carbon atoms. $X_3$ and $X_4$ may also, independently be alkoxy or dialkylamido radicals wherein the alkyl portion of said alkoxy and dialkylamido radicals contain from 1 to 20 carbon atoms, hydrocarbyl radicals and organometalloid radicals having from 1 to 20 carbon atoms. As indicated above, $Ar_1$ and $Ar_2$ could be linked to either $X_3$ or $X_4$. Finally, $X_3$ and $X_4$ may also be linked to each other through a suitable bridging group.

Illustrative, but not limiting, examples of boron compounds which may be used as an activator component in the preparation of the improved catalysts of this invention are trialkyl-substituted ammonium salts such as triethylammonium tetra (phenyl) boron, tripropylammonium tetra(phenyl)boron, tri(n-butyl)ammonium tetra(phenyl)boron, trimethylammonium tetra(p-tolyl)boron, trimethylammonium tetra(o-tolyl)boron, tributylammonium tetra(pentafluorophenyl)boron, tripropylammonium tetra(o,p-dimethylphenyl)boron, tributylammonium tetra(m,m-dimethylphenyl)boron, tributylammoniumtetra(p-tri-fluoromethylphenyl)boron and tri(n-butyl)ammonium tetra(o-tolyl)boron; N,N-dialkyl anilinium salts such as W,N-dimethylanilinium tetra(pentafluorophenyl)boron, N,N-diethylanilinium tetra(phenyl) boron and N,N-2,4,5-pentamethylanilinium tetra(phenyl)boron ; dialkyl ammonium salts such as di(i-propyl)amnonium tetra (pentafluorophenyl) boron and dicyclohexylammonium tetra(phenyl)boron; and triaryl phosphonium salts such as triphenylphosphonium

tetra(phenyl)boron, tri(methylphenyl)phosphonium tetra(phenyl)boron and tri(dimethylphenyl) phosphonium tetra (phenyl) boron.

Similar lists of suitable compounds containing other metals and metalloids which are useful as activator components may be made, but such lists are not deemed necessary to a complete disclosure. In this regard, it should be noted that the foregoing list is not intended to be exhaustive and that other useful boron compounds as well as useful compounds containing other metals or metalloids would be readily apparent to those skilled in the art from the foregoing general equations.

Activator components based on anions vhich contain a plurality of boron atoms may be represented by the following general formulae wherein (again for the purposes of illustration) the cation is a proton donor. However within the scope of this invention other cation types may be employed in accordance with the same general principles:

6. $[L'\text{-}H]_c[(CX)_a)(M''X')_m X'_b]^{c-}$, or

7. $[L'\text{-}H]_d[[[(CX_3)_{a'}(M''X_4)_{m'}(X_5)_b]^{c'-}]_2 M^{n+}]^{d-}$

wherein [L'-H] is either H+, ammonium or a substituted ammonium cation having up to 3 hydrogen atoms replaced with a hydrocarbyl radical containing from 1 to about 20 carbon atoms or a substituted-hydrocarbyl radical wherein one or more of the hydrogen atoms is replaced by a halogen atom phosphonium radicals, substituted-phosphonium radicals having up to 3 hydrogen atoms replaced with a hydrocarbyl radical containing from 1 to 20 carbon atoms wherein 1 or more of the hydrogen atoms is replaced by a halogen atom, containing from 1 to 20 carbon atoms and the like; C is carbon, M" is boron or phosphorus; each of X, X', X", $X_3$, $X_4$ and $X_5$ are radicals selected, independently from the group consisting of hydride radicals, halide radicals, hydrocarbyl radicals containing from 1 to about 20 carbon atoms, substituted-hydrocarbyl radicals, wherein one or more of the hydrogen atoms is replaced by a halogen atom, containing from 1 to 20 carbon atoms, organometalloid radicals wherein each hydrocarbyl substitution in the organo portion contains from 1 to 20 carbon atoms and said metal is selected from Group IV_A of the Periodic Table of the Elements and the like; M is a transition metal; "a" and "b" are integers ≥0; "c" is an integer ≥ 1; a + b + c = an even-numbered integer from 2 to 8; and "m" is an integer ranging from 5 to 22; "a'" and "b'" are the same or a different integer ≥ 0; "c'" is an integer ≥ 2; a' + b' + c' = an even-numbered integer from 4 to about 8 "m'" is an integer from 6 to 12; "n" is an integer such that 2c' - n = d; and "d" is an integer greater than or equal to 1.

Illustrative, but not limiting, examples of second components which can be used in preparing catalyst systems utilized in the process of this invention wherein the anion of the second component contains a plurality of metalloid atoms (as in formulae 6 and 7) are ammonium salts such as ammonium 1-carbadodecaborate (using 1-carbadodecaborate as an illustrative, but not limiting, counterion for the ammonium cations listed below): monohydrocarbyl-substituted ammonium salts such as methylammonium 1-carbadodecaborate, ethylammonium 1-carbadodecaborate, propylammonium 1-carbadodecaborate, isopropylammonium 1-carbadodecaborate, (n-butyl)ammonium 1-carbadodecaborate, anilinium 1-carbadodecaborate, and (p-tolyl)ammonium 1-carbadodecaborate; dihydrocarbyl-substituted ammonium salts such as dimethylammonium 1-carbadodecaborate, diethylammonium 1-carbadodecaborate, dipropylammonium 1-carbadodecaborate, diisopropylammonium 1-carbadodecaborate, di(n-butyl)ammonium 1-carbadodecaborate, diphenylammonium 1-carbadodecaborate and di(p-tolyl)ammonium 1-carbadodecaborate; trihydrocarbyl-substituted ammonium salts such as trimethylammonium 1-carbadodecaborate, triethylammonium 1-carbadodecaborate, tripropyl-ammonium 1-carbadodecaborate, tri(n-butyl) ammonium 1-carbadodecaborate, triphenylammonium 1-carbadodecaborate, tri(p-tolyl) ammonium 1-carbadodecaborate, N,N-dimethylanilinium 1-carbadodecaborate and N,N-diethylanilinium 1-carbadodecaborate.

Illustrative, but not limiting examples of second compounds corresponding to Formula 6 [using tri(n-butyl)ammonium as an illustrative, but not limiting, counterion for the anions listed below] are salts of anions such as bis[tri(n-butyl)ammonium] dodecaborate, bis[tri(n-butyl)ammonium]decachlorodecaborate, tri(n-butyl)ammonium dodecachlorododecaborate, tri(n-butyl) ammonium 1-carbadecaborate, tri (n-butyl) ammonium 1-carbaundecaborate, tri (n-butil) ammonium 1-carbadodecaborate, tri(n-butyl)ammonium 1-trimethylsilyl-1-carbadecaborate and tri(n-butyl) ammonium dibromo-1-carbadodecaborate; borane and carborane complexes and salts of borane and carborane anions such as decaborane(14), 7,8-dicarbaudecaborane(13), 2,7-dicarbaundecaborane(13),undecahydrido-7,8-dimethyl-7,8-dicarbaundecaborane, dodecahydrido-11-methyl-2,7-di-carbaundecaborane, tri (n-butyl) amnonium undecaborate(14), tri(n-butyl) ammonium 6-carbadecaborate (12), tri(n-butyl)ammonium 7-carbaundecaborate (13), tri(n-butyl)ammonium 7,8-dicarbaundecaborate(12), tri (n-butyl) ammonium 2,9-dicarbaundecaborate (l2 ), tri(n-butyl)ammonium dodecahydrido-8-methyl-7,9-dicarbaundecaborate, tri(n-butyl)ammonium undecahydrido-8-ethy1-7,9-carbaundecaborate, tri-(n-butyl) ammonium undecahydrio-8-allyl-7,9-dicarbaundecaborate, tri(n-butyl)ammonium undecahydrido-9-trimethylsilyl-7,8-dicarbaundecaborate and tri(n-butyl)ammonium undecahydrido-4-6,dibromo-7-carbaundecaborate; boranes and carboranes and salts of boranes and carboranes such as 4-carbanonaborane(14) , 1,3-dicarbanonaborane(13), 6,9-dicarbadecaborane(14), dodecahydrido-l-phenyl-1,3-dicarbanonaborane, dodecahydrido-1-methyl-1,3-dicarbanonaborane and undecahydrido-1,3-dimethyl-1-3,-dicarbanonaborane.

Illustrative, but not limiting examples of second compounds corresponding to Formula 7 [using tri(n-butyl)ammonium as an illustrative, but not limiting, counterion for the anions listed below] are salts of metallacarborane and metallaborane anions such as tri(n-butyl) anmonium bis(nonahydrido-1,3-dicarbanonaborato) cobaltate(III), tri(n-butyl) ammonium bis (undeca-hydrido-7,8-dicarbaundecaboratoferrate (III), tri(n-butyl)ammonium bis(undecahydrido-7,8-dicarbaundecaborato)cobaltate(III),tri(n-butyl)amnoniun bis(undecahydrido-7,8-dicarbaunaborato) nikelate(III), tri(n-butyl)ammonium bis (nonahydrido-7,8-dimethyl-7,8-dicarbaundecaborato)ferrate(III), tri(n-butyl)ammonium bis(nonahydrido-7, 8-dimethyl-7,8-dicarbaundecaborato)chromate(III). tri(n-butyl) ammonium bis(tribromooctahydrido-7,8-dicarbaundecaborato) cobaltate(III),tri(n-butyl)ammonium bis(undecahydridodicarbadodecaborato) cobaltate(III), tris[tri(n-butyl) ammonium] bis(undecahydrido-7-carbaundecaborato) chromate (III) , bis[tri (n-butyl)anmonium] bis(undecahydrido-7-carbaundecaborato) manganate (IV), bis [tri (N-butyl) ammonium] bis (undecahydrido-7-carbaundecaborato) cobaltate (III) and bis [tri(n-butyl)amnonium] bis(undecahydrido-7-carbaundecaborato)nickelate(IV). A similar list of representative phosphonium compounds can be recited as illustrative second compounds, but for the sake of brevity, it is simply noted that the phosphonium and substituted-phosphonium salts corresponding to the listed ammonium and substituted-ammonium salts could be used as second compounds in the present invention.

Choice of Metallocene-Activator Pairs

In general, and while most metallocene components identified above may be combined with most activator components identified above to produce an active olefin polymerization catalyst, it is important for continuity of the polymerization operations that either the metal cation initially formed from the metallocene component or a decomposition product thereof be a relatively stable catalyst. It is also important that the anion of the activator compound be stable to hydrolysis when an ammonium salt is used. Further, it is important that the reactivity (e.g. acidity) of the activator component be sufficient, relative to the metallocene component, to facilitate the needed charge (e.g. proton) transfer. Activator compounds containing aryl-ammonium salts such as N-N-dimethylanilium are more acidic than trialkylammonium salts and therefore are useful with a wider variety of metallocene components. The reactivity (e.g. basicity) of the metal complex must also be sufficient to facilitate the needed charge (e.g. proton) transfer. In general bis(cyclopentadienyl) metal compounds which can be hydrolyzed by aqueous solutions can be considered suitable as metallocene components to form the catalysts described herein.

As indicated, the ionic catalyst compositions used by the process of the present invention will, preferably, be prepared in a suitable solvent or diluent. Suitable solvents or diluents include any of the solvents known in the prior art to be useful as solvents in the polymerization of olefins, diolefins and acetylenically unsaturated monomers. Suitable solvents, then, include, but are not necessarily limited to, straight and branched-chain hydrocarbons such as isobutane, butane, pentane, hexane, heptane and octane ; cyclic and alicyclic hydrocarbons such as cyclohexane, cycloheptane, methylcyclohexane and methylcycloheptane and aromatic and alkyl-substituted aromatic compounds such as benzene, toluene and xylene. Suitable solvents also include liquid olefins which may act as monomers or comonomers including ethylene, propylene, butadiene, cyclopentene, 1-hexene, 3-methyl-1-pentene, 4-methyl-1-pentene, 1,4-hexadiene, 1-octene and 1-decene Suitable solvents further include basic solvents which are not generally useful as polymerization solvents when conventional Ziegler-Natta type polymerization catalysts are used such as chlorobenzene.

As before discussed, the active catalyst species of the ionic catalyst systems used by the process of this invention is relatively stable and is not subject to the ion equilibrium deactivation as are alumoxane cocatalyzed metallocene catalyst systems. Unlike metallocene-alumoxane catalyst systems wherein, to obtain a practical level of catalyst productivity it is generally required to use an amount of alumoxane, measured as aluminum atom, to provide a ratio of Al:transition metal well in excess of 1000:1; the ionic catalyst systems used in the process of this invention which are highly productive may be prepared at ratios of metallocene to activator of 10:1 to 1:1, preferably 3:1 to 1:1.

Furthermore, the structures of catalyst species depend on such factors as (1) the metallocene used and the degree to which the cyclopentadienyl ligands of such metallocenes are substituted; (2) the nature of the anion moiety of the second or activator compound and the degree and type of substitution on such anions; (3) the nature of the cation moiety of the second or activator compound - particularly (in the case where the counter ion is a proton donor) the molecular size of the neutral Lewis base which is liberated from such cation upon loss therefrom of a proton; and (4) the ratios at which the metallocene and activator compound are employed.

With respect to the combination of the metallocene component with the activator component to form a catalyst of this invention, it should be noted that the two compounds combined for preparation of the active catalyst must be selected so as to avoid transfer of a fragment of the anion to the metallocene metal cation, thereby forming a catalytically inactive species. This is done by steric hindrance, resulting form substitutions on the cyclopentadienyl carbon atoms as well as substitutions on the non-coordinating anion.

It follows, then, that the metallocene component comprising a penta-substituted cyclopentadienyl radical may be effectively used with a broader range of activator compounds than may be a metallocene components comprising cyclopentadienyl radicals of a lesser degree of substitution.

As the amount and size of the substitutions on a cyclopentadienyl radicals are reduced, however, more effective catalysts are obtained with activator compounds containing non-coordinating anions which are larger in size and more resistant to degradation. In the case where the non-coordinating anion is an anionic coordination complex, such as a tetraphenylboron derivative, substitutions on the phenyl rings can be used to prevent the transfer of a proton or an entire phenyl group from the anion to the metallocene metal cation. This can be accomplished by alkyl substitution in the ortho positions of the phenyl groups, or, more preferably, by perfluoro-substitutions on the anion. Thus, anionic coordination complexes containing perfluorophenyl-, trifluoromethylphenyl-, or bis-trifluoromethylphenyl rings are preferred for this subgenus of activator components. When the non-coordinating anion contains a plurality of boron atoms as described in general formulae 6 and 7, more effective catalysts are obtained with activator compounds containing larger anions, such as those encompassed by Equation 7 and those having larger m values in Equation 6. In these cases it is further preferable when using second compounds which are encompassed by Equation 6, that $a + b + c = 2$. Second compounds in which $a + b + c$ = even-numbered integers of 4 or more have acidic B-H-B moieties which can react further with the metallocene metal cation formed, leading to catalytically inactive compounds.

Process of Polymerization

In accordance with a preferred procedure the selected ionic catalyst system for syndiotactic polyolefin production may be used to produce such poly-α-olefin by slurry polymerization utilizing the olefin monomer as the polymerization diluent in which the selected catalyst is dissolved in an amount sufficient to yield the type of polymer desired. Generally the polymerization process is carried out with a pressure of from 68.9 kPa to 6.89 MPa (10 to 1000 psi), most preferably from 275 kPa to 4.14 MPa (40 to 600 psi). The polymerization diluent is generally maintained at a temperature of from -10 to 150°C, preferably from 20 to 100°C, and most preferably from 30 to 90°C. The catalyst systems used by the process of this invention may also be employed in a high temperature/pressure polymerization process. In such, the pressure can be in the range of 34.5 kPa to 275.8 MPa (5,000 to 40,000 psi) and the temperature in the range of 120-300°C.

The polymerization may be carried out as a batchwise slurry polymerization or as a continuous process slurry polymerization. The procedure of continuous process slurry polymerization is preferred, in which event α-olefin and catalyst are continuously supplied to the reaction zone in amounts equal to the α-olefin and catalyst removed from the reaction zone with the polymer in the product stream.

EXAMPLES

The following examples are intended to illustrate the invention, with Example 4 being concerned with syndiotactic polyolefin production according to the invention. Example 1 corresponds with Example 39 of EP-A-0277004 and is included to demonstrate the use of known metallocene ionic catalyst system to produce isotactic polypropylene. Similarly, Examples 2 and 3 show that variants of such metallocenes also yield polymer in the isotactic form. In contrast, Example 4 shows that a metallocene with structural and steric characteristics as described herein before will produce syndiotactic polymer.

Example 1 (comparative)

In this example, propylene was polymerized in liquid propylene by adding under a nitrogen atmosphere to a 1 L stainless-steel autoclave, previously flushed with nitrogen, 25 ml of a toluene solution containing racdimethylsilylbis (indenyl)hafnium dimethyl (10 mg) and N,N-dimethylanilinium tetrakis(pentafluorophenyl)boron (5 mg). Propylene (500 ml) was added and the autoclave stirred at 40°C for 4.5 hours. The autoclave was cooled and vented and the contents dried in a vacuum oven. The yield of isotactic polypropylene was 78.5 g. The weight-average molecular weight of this polymer was 555,000 and the molecular weight distribution was 1.86. The polymer had a melting point of 139°C. Analysis by $^{13}C$ NMR spectroscopy indicated that the polymer was about 95% isotactic.

Example 2 (comparative)

In this example, propylene was polymerized in liquid propylene by adding under a nitrogen atmosphere to a 1 L stainless-steel autoclave, previously flushed with nitrogen, 10 ml of a toluene solution containing racdimethylsilylbis (tetrahydroindenyl)hafnium dimethyl (6 mg) and N,N-dimethylanilinium tetrakis-(pentafluorophenyl)boron (10 mg). Propylene (300 ml) was added and the autoclave stirred at 60°C for 1 hour. The autoclave was cooled and vented and the contents dried in a nitrogen stream. The yield of isotactic polypropylene was 51.5 g. The weight-average molecular weight of this polymer was 106,000 and the molecular weight distribution was 2.59. The polymer had a melting point of 141.9°C.

Example 3 (comparative)

In this example, 1-butene was polymerized in a hexane diluent by adding under a nitrogen atmosphere to a 1 L stainless-steel autoclave, previously flushed with nitrogen and containing 300 ml dry deoxygentated hexane, 20 ml of a toluene solution containing racdimethylsilylbis(indeny)hafnium dimethyl (30 mg) and N,N-dimethylanilinium tetrakis (pentafluorophenyl)boron (10 mg). 1-Butene (100 ml) was added and the autoclave stirred at 40°C for 1 hour. The autoclave was cooled and vented and the contents stirred with acetone. The solid product was filtered off and dried in a nitrogen stream. The yield of isotactic poly-1-butene was 67 g. The weight-average molecular weight of this polymer was 76,000 and the molecular weight distribution was 2.51. The polymer had a melting point of 99.2°C and was found by C-13 NMR to be 97.2% isotatic.

Example 4

In this example, propylene was polymerized in a hexane diluent by adding under a nitrogen atmosphere to a 1 L stainless-steel autoclave, previously flushed with nitrogen and containing 100 ml dry deoxygentated hexane, 2 ml of a toluene solution containing 2-cyclopentadienyl-2-fluorenylpropane zirconium dimethyl (30 mg) and N,N-dimethylanilinium tetrakis(pentafluorophenyl)boron (30 mg). Propylene (400 ml) was added and the autoclave stirred at 50°C for 50 minutes. The autoclave was cooled and vented and the contents dried in a nitrogen stream. The yield of syndiotactic polypropylene was 7 g. The number-average molecular weight of this polymer was 25,000 and the molecular weight distribution was 2. The polymer had a melting point of 122°C.

**Claims**

**1.** A process for producing a syndiotactic crystalline poly-α-olefin, comprising the step of;

(a) contacting an α-olefin monomer at a temperature and pressure sufficient to induce polymerization thereof with a catalyst comprising the reaction product of

(i) a bis(cyclopentadienyl) Group IVB metal component of the formula

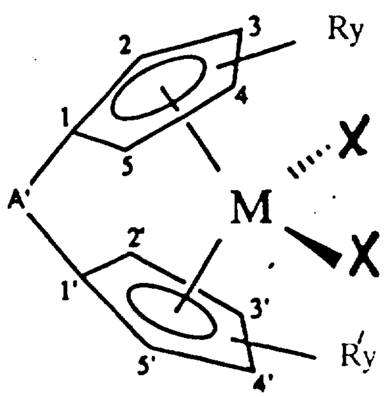

wherein M is titanium, zirconium or hafnium;
A'is a divalent hydrocarbon or silahydrocarbon radical which structurally bridges together the cyclopentadienyl ring ligands;
each X is independently selected from the group consisting of hydride radicals, hydrocarbyl radicals having from 1 to 20 carbon atoms, substituted hydrocarbyl radicals wherein one or more of the hydrogen atoms are replaced with a halogen atom, organometalloid radicals comprising a Group IV-A element wherein each of the hydrocarbyl substitutions contained in the organic portion of said organometalloid independently contain 1 to 20 carbon atoms, or both X substituents are joined and bound to the metal atom to form a metallacycle ring containing from 3 to 20 carbon atoms; each cyclopentadienyl group has from zero to 4 substituents (R or R') where Ry and $R'_Y$ are independently hydrocarbyl radicals containing from 1 to 50 carbon atoms; substituted hydrocarbyl radicals wherein one or more of the hydrogen atoms is replaced by a halogen radical, an amido radical, a phosphido radical, an alkoxy radical, or radical containing a Lewis acidic or basic nctionality; hydrocarbyl substituted metalloid radicals wherein the metalloid is selected from the Group IV-A of the Periodic Table

of elements; halogen radicals, amido radicals, phosphido radicals, alkoxy radicals, alkylborido radicals, or a radical containing a Lewis acidic or basic functionality; or two adjacent R groups are joined forming a $C_4$ to $C_{20}$ ring to give a saturated or unsaturated polycyclic cyclopentadienyl and "y" denotes the carbon atom of the cyclopentadienyl ring to which a R group is bonded;
Ry and R'y being chosen such that they
are of substantially different steric bulk and are bonded to cyclopentadienyl ring carbons so as to render each cyclopentadienyl ring to be symmetrical with respect to the A' bridging group but different with respect to each other; and

(ii) an activator component comprising
a cation capable of irreversibly reacting with a substituent of the bis(cyclopentadienyl) Group IVB metal compound to produce a bis(cyclopentadienyl) Group IVB metal cation; and
an anion which is compatible with and non-coordinating to and capable of stabilizing the Group IVB metal cation and sufficiently labile to be displaced therefrom by an olefinic or acetylenically unsaturated substrate;
(b) and recovering a crystalline poly-$\alpha$-olefin product which is predominantly of a syndiotactic stereochemical configuration.

**2.** The process of claim 1, wherein the activator component is of general formula

$$[(L'\text{-}H)^+]_d[(M')^{m+}Q_1Q_2...Q_n]^{d-}$$

wherein:

L' is a neutral Lewis base;
H is a hydrogen atom;
[L'-H] is a Bronsted acid;
M' is a metal or metalloid selected from the Groups subtended by Groups V-B to V-A, VIII-B, VIII, I-B, II-B, III-A, IV-A, and V-A;
$Q_1$ to $Q_n$ are selected, independently, from the group consisting of hydride radicals, dialkylamido radicals, alkoxide and aryloxide radicals, hydrocarbyl and substituted-hydrocarbyl radicals and organometalloid radicals and any one, but not more than one, of $Q_1$ to $Q_n$ may be a halide radical, the remaining $Q_1$ to $Q_n$ being, independently, selected from the foregoing radicals;
m is an integer from 1 to 7;
n is an integer from 2 to 8; and n - m = d; or of the general fbrmula:

$$[L'H]^+[BAr_1Ar_2X_3X_4]^-$$

Wherein:

L' is a neutral Lewis base;
H is a hydrogen atom;
$[L'\text{-}H]^+$ is a Bronsted acid;
B is boron in a valence state of 3;
$Ar_1$ and $Ar_2$ are the same or different aromatic or substituted-aromatic hydrocarbon radicals containing from 6 to 20 carbon atoms and may be linked to each other through a stable bridging group; and
$X_3$ and $X_4$ are radicals selected, independently, from the group consisting of hydride radicals, halide radicals, with the proviso that $X_3$ and $X_4$ will not be halide at the same time, hydrocarbyl radicals containing from 1 to 20 carbon atoms, substituted-hydrocarbyl radicals, wherein one or more of the hydrogen atoms is replaced by a halogen atom, containing from 1 to about 20 carbon atoms, hydrocarbyl-substituted metal (organometalloid) radicals wherein each hydrocarbyl substitution contains from 1 to 20 carbon atoms and said metal is selected from Group IV-A of the Periodic Table of the elements;
or of the general formula:

$$[L'\text{-}H]_c[(CX)_a)(M''X')_mX'_b]^{c-},$$

or

$$[L'\text{-}H]_d[[[(CX_3)_{a'}(M''X_4)_{m'}(X_5)_b]^{c'-}]_2M^{n+}]^{d-}$$

wherein [L'-H] is either $H^+$, ammonium or a substituted ammonium cation having up to 3 hydrogen atoms replaced with a hydrocarbyl radical containing from 1 to 20 carbon atoms or a substituted-hydrocarbyl radical

wherein one or more of the hydrogen atoms is replaced by a halogen atom phosphonium radicals, substituted-phosphonium radicals having up to 3 hydrogen atoms replaced with a hydrocarbyl radical containinq from 1 to 20 carbon atoms wherein 1 or more of the hydrogen atoms is replaced by a halogen atom, containing from 1 to 20 carbon atoms and the like; C is carbon, M" is boron or phosphorus; each of X, X', X", $X_3$, $X_4$ and $X_5$ are radicals selected, independently from the group consisting of hydride radicals, halide radicals, hydrocarbyl radicals containing from 1 to 20 carbon atoms, substituted-hydrocarbyl radicals, wherein one or more of the hydrogen atoms is replaced by a halogen atom, containing from 1 to 20 carbon atoms, organometalloid radicals wherein each hydrocarbyl substitution in the organo portion contains from 1 to 20 carbon atoms and said metal is selected from Group IV_A of the Periodic Table of the Elements and the like; M is a transition metal; "a" and "b" are integers ≥ 0; "c" is an integer ≥ 1; a + b + c = an even-numbered integer from 2 to about 8; and "m" is an integer ranging from 5 to about 22; "a'" and "b'" are the same or a different integer ≥ 0; "c'" is an integer ≥ 2; a' + b' + c' = an even-numbered integer from 4 to about 8; "m'" is an integer from 6 to about 12; "n" is an integer such that 2c' - n = d; and "d" is an integer greater than or equal to 1.

**3.** The process of claim 1 or 2 wherein the activator component is:

triethylammonium tetra(phenyl)boron, tripropylammonium tetra(phenyl)boron, tri(n-butyl) ammonium tetra(phenyl) boron, trimethylammonium tetra(p-tolyl)boron, trimethylammonium tetra(o-tolyl)boron, tributylammonium tetra(pentafluorophenyl)boron, tripropylammonium tetra(o,p-dimethylphenyl)boron, tributylammonium tetra (m,m-dimethylphenyl)boron,tributylammoniumtetra(p-tri-fluoromethylphenyl)boron and tri(n-butyl)ammonium tetra(o-tolyl)boron; N,N-dialkyl anilinium salts such as N,N-dimethylanilinium tetra(pentafluorophenyl)boron, N,N-diethylanilinium tetra(phenyl)boron, N,N-2,4,5-pentamethylanilinium tetra(phenyl)boron and the like; dialkyl ammonium salts such as di(i- propyl) ammonium tetra(pentafluorophenyl)boron and dicyclohexylammonium tetra(phenyl)boron; and triaryl phosphonium salts such as triphenylphosphonium tetra(phenyl)boron, tri (methylphanyl)phosphonium tetra(phenyl)boron, or tri(dimethylphenyl)phosphonium tetra(phenyl)boron.

**4.** The process of claim 1, 2, or 3, wherein the bis(cyclopentadienyl) Group IVB metal compound is a cyclopentadienyl-bridge-fluorenyl Group IVB metal compound, preferably a 2-cyclopentadienyl-2-fluorenylpropane Group IVB metal compound

**5.** The process of any preceding claim wherein the bis(cyclopentadienyl) Group IVB metal compound is used in a molar ratio with respect to the activator compound of from 10:1 to 1:1, preferably from 3:1 to 1:1.

**6.** The process according to any preceding claim when carried out at a pressure of from 68.9 kPa - 6.89 MPa (10-1000 psi), preferably from 275 kPa - 4.14 MPa (40 - 600 psi) and/or temperature of from 20 - 100°C, preferably from 30 - 90°C.

**7.** The process according to any preceding claim wherein the syndiotactic polyolefin product has weight average molecular weight greater than 100,000 and/or narrow molecular weight distribution.

**8.** The process according to any preceding claim wherein the polyolefin product is syndiotactic polypropylene.

## Patentansprüche

**1.** Verfahren zur Herstellung eines syndiotaktischen kristallinen Poly-α-olefins, bei dem in Stufen

(a) ein α-Olefinmonomer bei einer ausreichenden Temperatur und einem ausreichenden Druck, um dessen Polymerisation hervorzurufen, mit einem Katalysator kontaktiert wird, der das Reaktionsprodukt von

(i) einer Bis(cyclopentadienyl)-Gruppe IVB-Metallkomponente mit der Formel

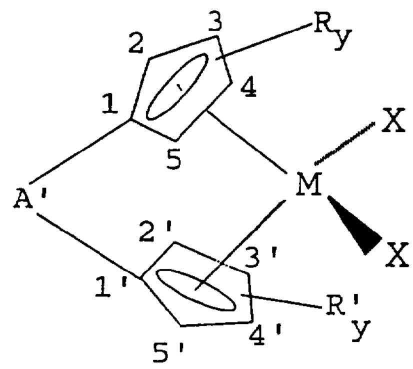

in der M Titan, Zirconium oder Hafnium ist,
A' ein zweiwertiger Kohlenwasserstoff- oder Silakohlenwasserstoffrest ist, der die beiden Cyclopentadienylringliganden strukturell miteinander verbrückt,
jedes X unabhängig ausgewählt ist aus der Gruppe bestehend aus Hydridresten, Kohlenwasserstoffresten mit 1 bis 20 Kohlenstoffatomen, substituierten Kohlenwasserstoffresten, in denen ein oder mehrere der Wasserstoffatome durch ein Halogenatom ersetzt ist bzw. sind, Organometalloidresten, die ein Gruppe IV-A-Element umfassen, wobei jeder der in dem organischen Anteil des Organometalloids enthaltene Kohlenwasserstoffsubstituenten unabhängig 1 bis 20 Kohlenstoffatome enthält, oder beide X-Substituenten miteinander verbunden und unter Bildung eines Metallacyclusrings mit 3 bis 20 Kohlenstoffatomen an das Metallatom gebunden sind, jede Cyclopentadienylgruppe Null bis 4 Substituenten (R oder R') hat, wobei $B_y$ und $R'_y$ unabhängig Kohlenwasserstoffreste mit 1 bis 50 Kohlenstoffatomen; substituierte Kohlenwasserstoffreste, in denen ein oder mehrere der Wasserstoffatome durch einen Halogenrest, einen Amidorest, einen Phosphidorest, einen Alkoxyrest oder einen Rest, der eine Lewis-Säure- oder -Basefunktionalität enthält, ersetzt ist bzw. sind; kohlenwasserstoffsubstituierte Metalloidreste, in denen das Metalloid ausgewählt ist aus der Gruppe IV-A des Periodensystems der Elemente; Halogenreste, Amidoreste, Phosphidoreste, Alkoxyreste, Alkylboridoreste oder ein Rest, der eine Lewis-Säure- oder -Basefunktionalität enthält, sind, oder bei dem zwei benachbarte R-Gruppen unter Bildung eines $C_4$- bis $C_{20}$-Rings verbunden sind, um ein gesättigtes oder ungesättigtes polycyclisches Cyclopentadienyl zu ergeben, und "y" das Kohlenstoffatom des Cyclopentadienylrings bedeutet, an das die R-Gruppe gebunden ist;
wobei
$R_y$ und $R'_y$ so gewählt sind, daß sie von wesentlich verschiedener sterischer Ausdehnung sind und so an Cyclopentadienylringkohlenstoffatome gebunden sind, daß jeder Cyclopentadienylring symmetrisch in bezug auf die A'-Brückengruppe, aber unterschiedlich in bezug zueinander gemacht ist, und
(ii) einer Aktivatorkomponente ist, die ein Kation, das in der Lage ist, in irreversibler Weise mit einem Substituenten der Bis(cyclopentadienyl)-Gruppe IVB-Metallverbindung unter Bildung eines Bis(cyclopentadienyl)-Gruppe IVB-Metallkations zu reagieren, und
ein Anion umfaßt, das mit dem Gruppe IVB-Metallkation verträglich ist und mit diesem nicht koordiniert und in der Lage ist, es zu stabilisieren, und ausreichend labil ist, um durch ein olefinisch oder acetylenisch ungesättigtes Substrat von diesem verdrängt zu werden,

b) und ein kristallines Poly-$\alpha$-olefinprodukt gewonnen wird, das überwiegend von einer syndiotaktischen stereochemischen Konfiguration ist.

**2.** Verfahren nach Anspruch 1, bei dem die Aktivatorverbindung die allgemeine Formel

$$[(L'\text{-}H)^+]_d[(M')^{m+}Q_1Q_2...Q_n]^{d-}$$

in der

L' eine neutrale Lewisbase ist,
H ein Wasserstoffatom ist,
$[L'\text{-}H]^+$ eine Brönstedt-Säure ist,
M' ein Metall oder Metalloid ausgewählt aus den Gruppen ist, die von den Gruppen V-B bis V-A, VIII-B, VIII, I-B, II-B, III-A, IV-A und V-A begrenzt sind,
$Q_1$ bis $Q_n$ unabhängig ausgewählt sind aus der Gruppe bestehend aus Hydridresten, Dialkylamidoresten, Alkoxid-und Aryloxidresten, Kohlenwasserstoff- und substituierten Kohlenwasserstoffresten und Organometalloidresten, wobei ein beliebiger, aber nicht mehr als einer von $Q_1$ bis $Q_n$ ein Halogenidrest sein kann, wobei die verbleibenden $Q_1$ bis $Q_n$ unabhängig ausgewählt sind aus den vorhergehenden Resten,
m eine ganze Zahl von 1 bis 7 ist,
n eine ganze Zahl von 2 bis 8 ist und n - m = d ist, oder die allgemeine Formel

$$[L'H]^+[BAr_1Ar_2X_3X_4]^-$$

in der

L' eine neutrale Lewisbase ist,
H ein Wasserstoffatom ist,
$[L'-H]^+$ eine Brönstedt-Säure ist,
B Bor in der Wertigkeitsstufe 3 ist,
$Ar_1$ und $Ar_2$ die gleichen oder unterschiedliche aromatische oder substituierte aromatische Kohlenwasserstoffreste mit 6 bis 20 Kohlenstoffatomen sind, die durch eine stabile Brückengruppe miteinander verbunden sein können, und
$X_3$ und $X_4$ Reste sind, die unabhängig ausgewählt sind aus der Gruppe bestehend aus Hydridresten, Halogenidresten mit der Maßgabe, daß $X_3$ und $X_4$ nicht beide gleichzeitig Halogenid sind, Kohlenwasserstoffresten mit 1 bis 20 Kohlenstoffatomen, substituierten Kohlenwasserstoffresten mit 1 bis etwa 20 Kohlenstoffatomen, bei denen ein oder mehrere der Wasserstoffatome durch ein Halogenatom ersetzt ist bzw. sind, kohlenwasserstoff-substituierten Metallresten (Organometalloidresten), bei denen jeder Kohlenwasserstoffsubstituent 1 bis 20 Kohlenstoffatome enthält und das Metall ausgewählt ist aus der Gruppe IV-A des Periodensystems der Elemente,

oder die allgemeine Formel

$$[L'-H]_c[(CX)_a)(M''X')_mX'_b]^{c-}$$

oder

$$[L'-H]_d[[[(CX_3)_{a'}(M''X_4)_{m'}(X_5)_b]^{c'-}]_2M^{n+}]^{d-}$$

hat, wobei [L'-H] entweder $H^+$, Ammonium- oder ein substituiertes Ammoniumkation, bei dem bis zu 3 Wasserstoffatome durch einen Kohlenwasserstoffrest mit 1 bis 20 Kohlenstoffatomen oder einen substituierten Kohlenwasserstoffrest, bei dem ein oder mehrere der Wasserstoffatome durch ein Halogenatom ersetzt ist bzw. sind, ersetzt sind, Phosphoniumreste, substituierte Phosphoniumreste, bei denen bis zu 3 Wasserstoffatome durch einen Kohlenwasserstoffrest mit 1 bis 20 Kohlenstoffatomen oder einen substituierten Kohlenwasserstoffrest mit 1 bis 20 Kohlenstoffatomen, bei dem 1 oder mehr Wasserstoffatome durch ein Halogenatom ersetzt sind, ersetzt sind, und dergleichen ist;
C Kohlenstoff ist; M" Bor oder Phosphor ist; jedes von X, X', X", $X_3$, $X_4$ und $X_5$ Reste sind, die unabhängig ausgewählt sind aus der Gruppe bestehend aus Hydridresten, Halogenidresten, Kohlenwasserstoffresten mit 1 bis 20 Kohlenstoffatomen, substituierten Kohlenwasserstoffresten mit 1 bis 20 Kohlenstoffatomen, bei denen ein oder mehrere der Wasserstoffatome durch ein Halogenatom ersetzt ist bzw. sind, Organometalloidresten, bei denen jeder Kohlenwasserstoffsubstituent in dem Organoanteil 1 bis 20 Kohlenstoffatome enthält und das Metall ausgewählt ist aus der Gruppe IV-A des Periodensystems der Elemente und dergleichen; M ein Übergangsmetall ist; "a" und "b" ganze Zahlen ≥ 0 sind; "c" eine ganze Zahl ≥ 1 ist; a + b + c = eine geradzahlige ganze Zahl von 2 bis etwa 8 ist und "m" eine ganze Zahl im Bereich von 5 bis etwa 22 ist; "a'" und "b'" die gleiche oder eine andere ganze Zahl ≥ 0 sind; "c'" eine ganze Zahl ≥ 2 ist; a' + b' + c' = eine geradzahlige ganze Zahl von 4 bis etwa 8 ist; "m'" eine ganze Zahl von 6 bis etwa 12 ist; "n" eine ganze Zahl ist, so daß 2c' - n = d ist; und "d" eine ganze Zahl größer als oder gleich 1 ist.

**3.** Verfahren nach Anspruch 1 oder 2, bei dem die Aktivatorverbindung Triethylammonium-tetra(phenyl)bor, Tripropylammonium-tetra(phenyl)bor, Tri(n-butyl)ammonium-tetra(phenyl)bor, Trimethylammonium-tetra(p-tolyl)bor, Trimethylammonium-tetra(o-tolyl)bor, Tributylammonium-tetra(pentafluorphenyl)-bor, Tripropylammonium-tetra (o,p-dimethylphenyl)bor, Tributylammonium-tetra(m,m-dimethylphenyl)bor, Tributylammonium-tetra(p-trifluormethylphenyl)bor und Tri(n-butyl)ammonium-tetra(o-tolyl)bor; N,N-Dialkylaniliniumsalze wie N,N-Dimethylanilinium-tetra(pentafluorphenyl)bor, N,N-Diethylanilinium-tetra(phenyl)bor, N,N-2,4,5-Pentamethylanilinium-tetra(phenyl)bor und dergleichen; Dialkylammoniumsalze wie Di-(isopropyl)ammonium-tetra(pentafluorphenyl)bor und Dicyclohexylammonium-tetra(phenyl)bor und Triarylphosphoniumsalze wie Triphenylphosphonium-tetra(phenyl)bor, Tri(methylphenyl)phosphonium-tetra(phenyl)bor, oder Tri(dimethylphenyl)-phosphonium-tetra(phenyl)bor ist.

4. Verfahren nach Anspruch 1, 2 oder 3, bei dem die Bis(cyclopentadienyl)-Gruppe-IVB-Metallverbindung eine Cyclopentadienyl-brücke-fluorenyl-Gruppe-IVB-Metallverbindung, vorzugsweise eine 2-Cyclopentadienyl-2-fluorenylpropan-Gruppe IVB-Metallverbindung ist.

5. Verfahren nach einem der vorhergehenden Ansprüche, bei dem die Bis(cyclopentadienyl)-Gruppe IVB-Metallverbindung in einem Molverhältnis in bezug auf die Aktivatorverbindung von 10:1 bis 1:1, vorzugsweise 3:1 bis 1:1, verwendet wird.

6. Verfahren nach einem der vorhergehenden Ansprüche, das bei einem Druck von 68,9 kPa bis 6,89 MPa (10 bis 1000 psi), vorzugsweise 275 kPa bis 4,14 MPa (40 bis 600 psi) und/oder einer Temperatur von 20 bis 100°C, vorzugsweise 30 bis 90°C durchgeführt wird.

7. Verfahren nach einem der vorhergehenden Ansprüche, bei dem das syndiotaktische Polyolefinprodukt ein durchschnittliches Molekulargewicht (Gewichtsmittel) größer als 100 000 und/-oder eine enge Molekulargewichtsverteilung hat.

8. Verfahren nach einem der vorhergehenden Ansprüche, bei dem das Polyolefinprodukt syndiotaktisches Polypropylen ist.

**Revendications**

1. Procédé de production d'une poly-α-oléfine cristalline syndiotactique, comprenant les étapes consistant :

(a) à mettre en contact un monomère α-oléfinique à une température et sous une pression suffisantes pour induire sa polymérisation avec un catalyseur comprenant le produit de réaction

(i) d'un bis(cyclopentadiényle)-métal du Groupe IVB, de formule

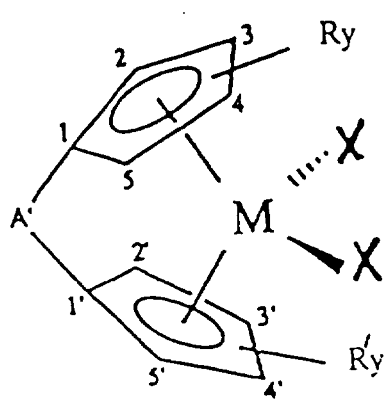

dans laquelle M représente le titane, le zirconium ou l'hafnium ;
A' représente un radical hydrocarboné ou silahydrocarboné divalent qui assure structuralement le pontage entre les ligands consistant en noyaux cyclopentadiényle ;
chaque radical X est choisi, indépendamment, dans le groupe consistant en radicaux hydrure, radicaux hydrocarbyle ayant 1 à 20 atomes de carbone, radicaux hydrocarbyle substitués dans lesquels un ou plusieurs des atomes d'hydrogène sont remplacés par un atome d'halogène, radicaux organométalloïdiques comprenant un élément du Groupe IVA, dans lesquels chacune des substitutions hydrocarbyle présentes dans la portion organique dudit organométalloïde contient, indépendamment, 1 à 20 atomes de carbone, ou bien les deux substituants X sont réunis et liés à l'atome métallique en formant un noyau métallacyclique contenant 3 à 20 atomes de carbone ; chaque groupe cyclopentadiényle porte zéro à 4 substituants (R ou R'),
Ry et R'y représentent, indépendamment, des radicaux hydrocarbyle contenant 1 à 50 atomes de carbone ; des radicaux hydrocarbyle substitués dans lesquels un ou plusieurs des atomes d'hydrogène sont remplacés par un radical halogéno, un radical amido, un radical phosphido, un radical alkoxy ou un radical contenant une fonctionnalité acide ou basique de Lewis ; des radicaux métalloïdiques à substituants hydrocarbyle dans lesquels le métalloïde est choisi dans le Groupe IV-A du Tableau Périodique des Eléments ; des radicaux halogéno, des radicaux amido, des radicaux phosphido, des radicaux alkoxy, des radicaux alkylborido, ou un radical contenant une fonctionnalité acide ou basique de Lewis ; ou bien deux groupes R adjacents sont joints en formant un noyau en $C_4$ à $C_{20}$ donnant un groupe cyclopentadiényle polycyclique saturé ou insaturé et "y" représente l'atome de carbone du noyau cyclopentadiényle auquel est lié un groupe R ;

Ry et R'y étant choisis de telle sorte qu'ils présentent des encombrements stériques nettement différents et qu'ils soient liés aux atomes de carbone du noyau cyclopentadiényle de manière à rendre chaque noyau cyclopentadiényle symétrique par rapport au groupe de pontage A' mais différent de l'autre noyau cyclopentadiényle ; et

(ii) un activateur comprenant
un cation capable de réagir de manière irréversible avec un substituant du bis(cyclopentadiényle)-métal du Groupe IVB en produisant un bis(cyclopentadiényle)-cation de métal du Groupe IVB ; et
un anion qui est compatible avec, non apte à la coordination avec, et capable de stabiliser, le cation de métal du Groupe IVB et suffisamment labile pour en être déplacé par un substrat à insaturation oléfinique ou acétylénique ;
(b) à recueillir un produit poly-$\alpha$-oléfinique cristallin qui présente de manière prédominante une configuration stéréochimique syndiotactique.

**2.** Procédé suivant la revendication 1, dans lequel l'activateur répond à la formule générale

$$[(L'\text{-}H)^+]_d[(M')^{m+}Q_1Q_2...Q_n]^{d-}$$

dans laquelle :

L' représente une base neutre de Lewis ;
H représente un atome d'hydrogène ;
[L'-H] représente un acide de Bronsted ;
M' représente un métal ou métalloïde choisi dans les groupes sous-tendus par les Groupes V-B à V-A, VIII-B, VIII, I-B, II-B, III-A, IV-A et V-A ;
$Q_1$ à $Q_n$ sont choisis, indépendamment, dans le groupe consistant en radicaux hydrure, radicaux dialkylamido, radicaux alkoxy et aryloxy, radicaux hydrocarbyle et hydrocarbyle substitués et radicaux organométalloïdiques, et l'un quelconque, mais pas plus d'un, des radicaux $Q_1$ à $Q_n$ pouvant représenter un radical halogénure, les groupes $Q_1$ à $Q_n$ restants étant choisis, indépendamment, parmi les radicaux précités ;
m est un nombre entier de 1 à 7 ;
n est un nombre entier de 2 à 8 ; et n - m = d ; ou à la formule générale :

$$[L'H]^+[BAr_1Ar_2X_3X_4]^-$$

dans laquelle :

L' représente une base neutre de Lewis ;
H représente un atome d'hydrogène ;
$[L'\text{-}H]^+$ représente un acide de Brönsted ;
B représente le bore à l'état de valence 3 ;
$Ar_1$ et $Ar_2$ représentent des radicaux hydrocarbonés aromatiques ou aromatiques substitués identiques ou différents contenant 6 à 20 atomes de carbone et peuvent être liés l'un à l'autre par un groupe de pontage stable ; et
$X_3$ et $X_4$ représentent des radicaux choisis, indépendamment, dans le groupe consistant en radicaux hydrure, radicaux halogénure, sous réserve que $X_3$ et $X_4$ ne représentent pas en même temps des radicaux halogénure, radicaux hydrocarbyle contenant 1 à 20 atomes de carbone, radicaux hydrocarbyle substitués, dans lesquels un ou plusieurs des atomes d'hydrogène sont remplacés par un atome d'halogène, contenant 1 à environ 20 atomes de carbone, radicaux formés par un métal à substituant hydrocarbyle (radicaux organométalloïdiques) dans lesquels chaque substituant hydrocarbyle contient 1 à 20 atomes de carbone et ledit métal est choisi dans le Groupe IV-A du Tableau Périodique des Eléments ;
ou à la formule générale :

$$[L'\text{-}H]_c[(CX)_a)(M''X')_m X'_b]^{c-},$$

ou

$$[L'\text{-}H]_d[[[(CX_3)_{a'}(M''X_4)_{m'}(X_5)_b]^{c'-}]_2M^{n+}]^{d-}$$

dans laquelle [L'-H] représente $H^+$, un cation ammonium ou un cation ammonium substitué ayant jusqu'à 3 atomes d'hydrogène remplacés par un radical hydrocarbyle contenant 1 à 20 atomes de carbone ou un radical hydrocarbyle substitué dans lequel un ou plusieurs des atomes d'hydrogène sont remplacés par un atome d'halogène, des radicaux phosphonium, des radicaux phosphonium substitués ayant jusqu'à 3 atomes d'hydrogène remplacés par un radical hydrocarbyle contenant 1 à 20 atomes de carbone, dans lesquels un ou plus d'un des atomes d'hydrogène sont remplacés par un atome d'halogène, contenant 1 à 20 atomes de carbone, etc. ; C représente le carbone, M" représente le bore ou le phosphore ; chacun des radicaux X, X', X", $X_3$, $X_4$ et $X_5$ représentent un radical choisi, indépendamment, dans le groupe consistant en radicaux hydrure, radicaux halogénure, radicaux hydrocarbyle contenant 1 à 20 atomes de carbone, radicaux hydrocarbyle substitués, dans lesquels un ou plusieurs des atomes d'hydrogène sont remplacés par un atome d'halogène, contenant 1 à 20 atomes de carbone, radicaux organométalloïdiques, dans lesquels chaque substituant hydrocarbyle dans la portion organique contient 1 à 20 atomes de carbone et ledit métal est choisi dans le Groupe IV-A du Tableau Périodique des Eléments, etc. ; M représente un métal de transition "a" et "b" sont des nombres entiers égaux ou supérieurs à 0 ; "c" est un nombre entier égal ou supérieur à 1; la somme a + b + c est égale à un nombre entier pair de 2 à environ 8 ; et "m" est un nombre entier allant de 5 à environ 22 ; "a'" et "b'" sont identiques ou différents et représentent un nombre entier égal ou supérieur à 0 ; "c'" représente un nombre entier égal ou supérieur à 2 ; la somme a' + b' + c' représente un nombre entier pair de 4 à environ 8 ; "m'" est un nombre entier de 6 à environ 12 ; "n" est un nombre entier tel que 2c' - n = d ; et d est un nombre entier supérieur ou égal à 1.

**3.** Procédé suivant la revendication 1 ou la revendication 2, dans lequel l'activateur est :

le triéthylammonium-tétra(phényl)bore, le tripropylammonium-tétra(phényl)bore, le tri(n-butyl)ammonium-tétra (phényl)bore, le triméthylammonium-tétra(p-tolyl)bore, le triméthylammonium-tétra (o-tolyl) bore, le tributylammonium-tétra(pentafluorophényl)bore, le tripropylammonium-tétra(o,p-diméthylphényl) bore, le tributylammonium-tétra (m,m-diméthylphényl) bore, le tributylammonium-tétra(p-trifluorométhylphényl)bore ou le tri(n-butyl) ammonium-tétra(o-tolyl)bore; un sel de N,N-dialkylanilinium tel que le N,N-diméthylanilinium-tétra(pentafluorophényl)bore, le N,N-diéthylanilinium-tétra(phényl)bore, le N,N-2,4,5-pentaméthyl-anilinium-tétra(phényl)bore, etc. ; des sels de dialkyl-ammonium tel que le di(isopropyl)ammonium-tétra(pentafluoro-phényl) bore et le dicyclohexylammonium-tétra (phényl)bore ; et des sels de triarylphosphonium tel que le triphénylphosphonium-tétra (phényl)bore, le tri(méthylphényl)phosphonium-tétra(phényl)bore ou le tri(diméthylphényl)phosphonium-tétra (phényl)bore.

**4.** Procédé suivant la revendication 1, 2 ou 3, dans lequel le bis(cyclopentadiényle) -métal du Groupe IVB est un cyclopentadiényle-groupe de pontage-fluorényle-métal du Groupe IVB, de préférence un 2-cyclopentadiényl-2-fluorénylpropane-métal du Groupe IVB.

**5.** Procédé suivant l'une quelconque des revendications précédentes, dans lequel le bis(cyclopentadiényle)-métal du Groupe IVB est utilisé en un rapport molaire de ce composé à l'activateur compris dans l'intervalle de 10:1 à 1:1, de préférence de 3:1 à 1:1.

**6.** Procédé suivant l'une quelconque des revendications précédentes, mis en oeuvre sous une pression de 68,9 kPa à 6,89 MPa (10 à 1000 psi), de préférence de 275 kPa à 4,14 MPa (40 à 600 psi) et/ou à une température de 20 à 100°C, de préférence de 30 à 90°C.

**7.** Procédé suivant l'une quelconque des revendications précédentes, dans lequel le produit polyoléfinique syndiotactique a une moyenne pondérale du poids moléculaire supérieure à 100 000 et/ou une distribution étroite des poids moléculaires.

**8.** Procédé suivant l'une quelconque des revendications précédentes, dans lequel le produit polyoléfinique consiste en un polypropylène syndiotactique.